# EUROPEAN PATENT APPLICATION

(11) **EP 2 961 170 A1**
(43) Date of publication of application: **30.12.2015**
(21) Application number: 15164998.5
(22) Date of filing: 24.04.2015
(51) Int. Cl.: H04N 19/70, G06T 11/00, G06T 11/60, G06T 3/40, G06K 9/32

(54) **MULTIPLE RASTERIZING DISPLAYS FOR MULTIPLE ROIS IN AN OVERLAID DISPLAY**

(30) Priority: 25.04.2014 US 201414262172
(71) Applicant: Tektronix, Inc., Beaverton, Oregon 97077-0001 (US)
(72) Inventor: Kitagawa, Tsuyoshi, Beaverton, OR 97007 (US)
(74) Representative: Clarke, Jeffrey David

(57) **Abstract**

An electronic device can include an input configured to receive video data, at least one region of interest (ROI) block configured to identify an ROI within the video data, and at least one rasterizing block coupled with the at least one ROI block and configured to rasterize an image based on the ROI within the video data as identified by the at least one ROI block. A display processor can be configured to provide as output an overlay display in which the image rasterized by the at least one rasterizing block is overlaid a rasterized image corresponding to the video data.

## Description

### Technical Field

This disclosure relates generally to various types of electronic instrumentation and, more particularly, to electronic devices that are suitable for providing any of a number of visual displays such as a waveform display, a vector display, or a diamond display, for example.

### Background

When filming a typical television or movie production, the lighting engineer and/or camera operator usually need to set up lights and a camera to take shots having the "look" that the producer wants. A waveform display in a waveform monitor (WFM) has been used in such situations to set up the lighting and camera in order to get a shoot having highest contrast but without white/black clipping. In certain cases where the producer wants a specific contrast between objects, however, the full line waveform display cannot determine the level for specific objects. A line select mode will generally work for such purposes, but now the level balance between the specific objects and the non-specified objects does not show up in a waveform display. While certain prior measurement systems and devices may provide the levels for specific regions in numeric expression and thus allow the user to compare levels between regions, such systems and devices do not effectively communicate to the user the level balance between specific regions and non-specified regions.

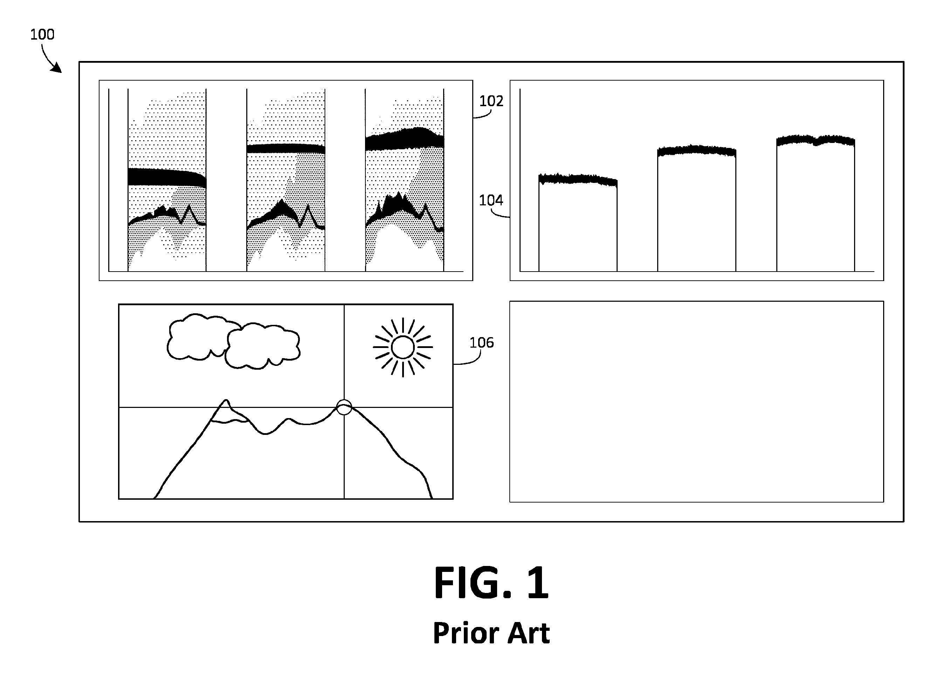

Certain electronic devices may have or provide a waveform display, a vector display, a diamond display, or any of a number of other rasterizing displays available in current waveform monitors. Such displays may have a feature to allow a user to select a region of interest (ROI) such as a line select to create a rasterized display for a specific region as specified by the ROI feature. Some waveform monitors can display two rasterizing displays at the same time, one with line select and the other one without line select. FIGURE 1 illustrates an example of such a prior waveform display 100. In the example, the waveform display 100 has one rasterizing display with line select 104 and another rasterizing display without line select 102 that both correspond to the same image in an image display 106. However, none of today's waveform monitors are able to display two rasterizing displays made from different ROIs in a single tile.

Accordingly, a need remains for an electronic device having a display or monitor that is capable of displaying at least two rasterizing displays made from different ROIs in a single tile.

### Summary

Embodiments of the disclosed technology generally offer multiple rasterizing displays made from different regions of interest (ROIs) in a single tile in order to enable the user to perceive the differences between the rasterized displays with different ROIs more intuitively.

### Brief Description of the Drawings

FIGURE 1 illustrates an example of a prior waveform display having multiple tiles.
FIGURE 2 illustrates an example of a multi-ROI rasterizing display system in accordance with certain embodiments of the disclosed technology.
FIGURE 3 illustrates an example of a waveform display system in accordance with certain embodiments of the disclosed technology.
FIGURE 4 illustrates an example of a vector display system in accordance with certain embodiments of the disclosed technology.
FIGURE 5 illustrates an example of a diamond display system in accordance with certain embodiments of the disclosed technology.

### Detailed Description

Embodiments of the disclosed technology are generally directed to electronic devices suitable for providing an overlaid waveform display from a full line waveform and a waveform for one or more specific regions. In certain situations, the specific region is a single line, though the region need not be only a line; in other situations, the region can be a spatial area. That is, multiple waveforms from multiple regions can be overlaid in a single waveform display. Overlaying the waveforms with different colors or implementing other ways of differentiating them may be used to distinguish each region in a waveform.

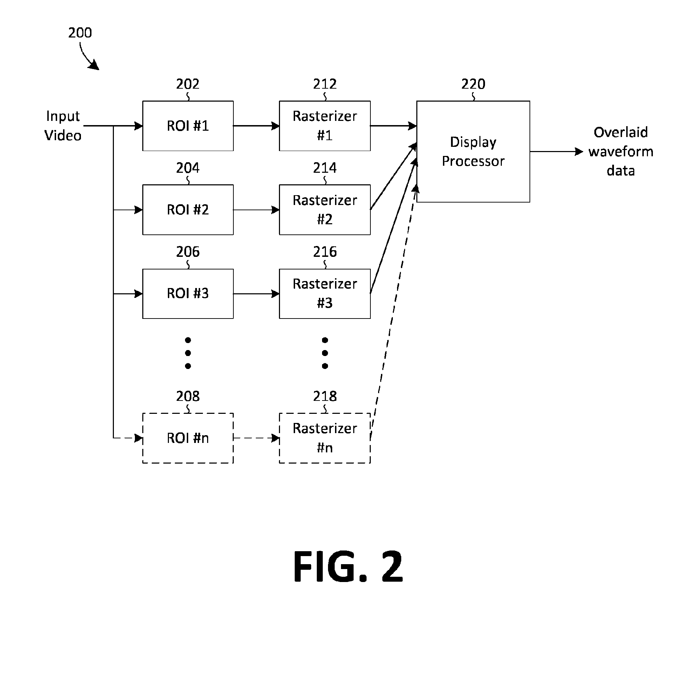

FIGURE 2 illustrates an example of a multi-ROI rasterizing display system 200 in accordance with certain embodiments of the disclosed technology. In the example, an input video signal (e.g., an image, a video feed, or a file such as a QuickTime file) is provided as input to a multi-ROI selection block stage so that video data for a specified region can be selected, e.g., by a user. The multi-ROT selection block stage typically has two or three ROI selection blocks 202, 204, 206, though virtually any number n of ROI selection blocks may be used as indicated by the nth block 208. The selected video data is then forwarded to a rasterizer stage having a number n of rasterizer blocks 212, 214, 216, 218 corresponding, respectively, to the n ROI selection blocks 202, 204, 206, 208.

According to embodiments, one or more ROIs can be set for an entire display, a single line with line select feature, or a spatial area such as 64x64 pixel area in an image. Each rasterizer block 212, 214, 216, 218 can make a rasterized image in a waveform, vector, or any other suitable form as selected by way of a user interface. The rasterized images provided as output from the multiple rasterizer blocks 212, 214, 216, 218 can then be provided to a display processor 220 to output overlaid waveform data to produce an overlaid display, within which each rasterized image may be layered with different colors, brightness, or other distinguishing characteristic in order to allow the user to visually distinguish each image from the other ones in a significantly easier and more convenient manner.

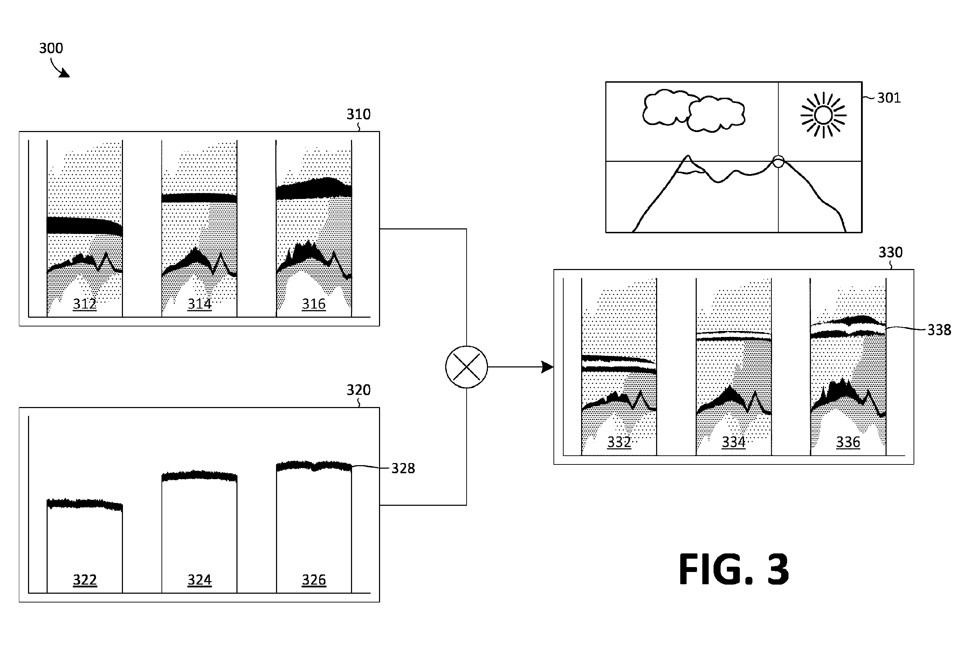

FIGURE 3 illustrates an example of a waveform display system 300 for an input image 301 in accordance with certain embodiments of the disclosed technology. In the example, a rasterized display for a particular ROI 320 of the image 301 having R data 322, G data 324, and B data 326 is overlaid on a rasterized display for the entire image 310 having R data 312, G data 314, and B data 316, thus resulting in the final image 330 having R data 332, G data 334, and B data 336 to be visually presented to the user. In the example, the waveform 328 in the ROI display 320 is presented in a different color 338 when presented in the final image 330 so as to be easily distinguishable from the rasterized display for the entire image 310 in the final image 330.

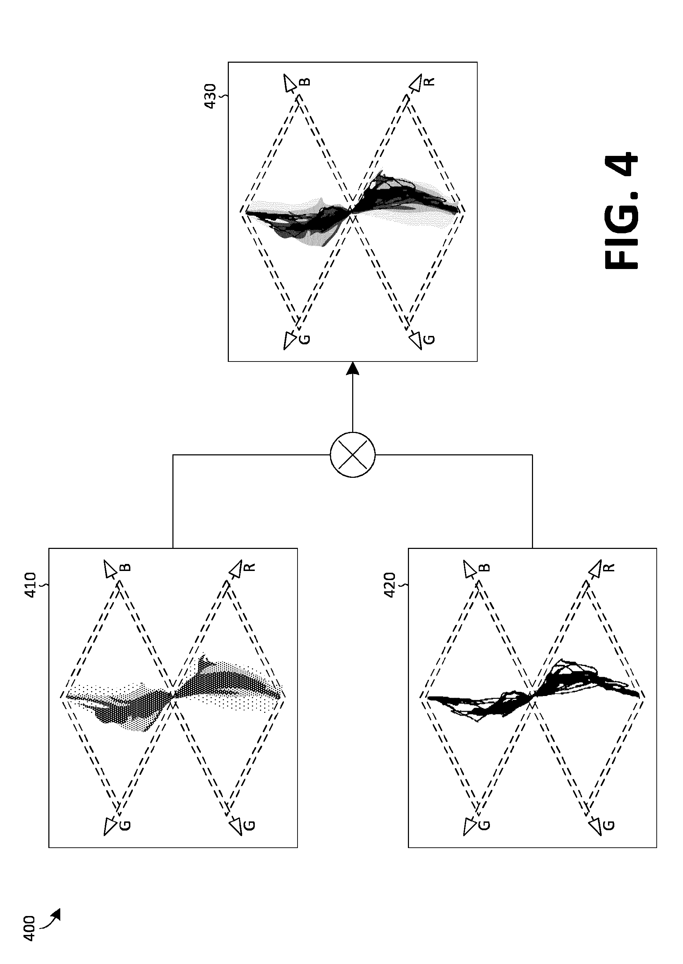

FIGURE 4 illustrates an example of a vector display system 400 in accordance with certain embodiments of the disclosed technology. With such a vector display system 400, an operator can confirm the chrominance level and phase for a specific region while checking the balance against other regions in a certain scene. In the example, a rasterized display for a particular ROI 420 of an image is overlaid on a rasterized display for the entire image 410, thus resulting in the final image 430 to be visually presented to the user. The waveform in the ROI display 420 may be presented in a different color, shading, etc. in the final image 430 so as to be more readily distinguishable from the rasterized display for the entire image 410 in the final image 430.

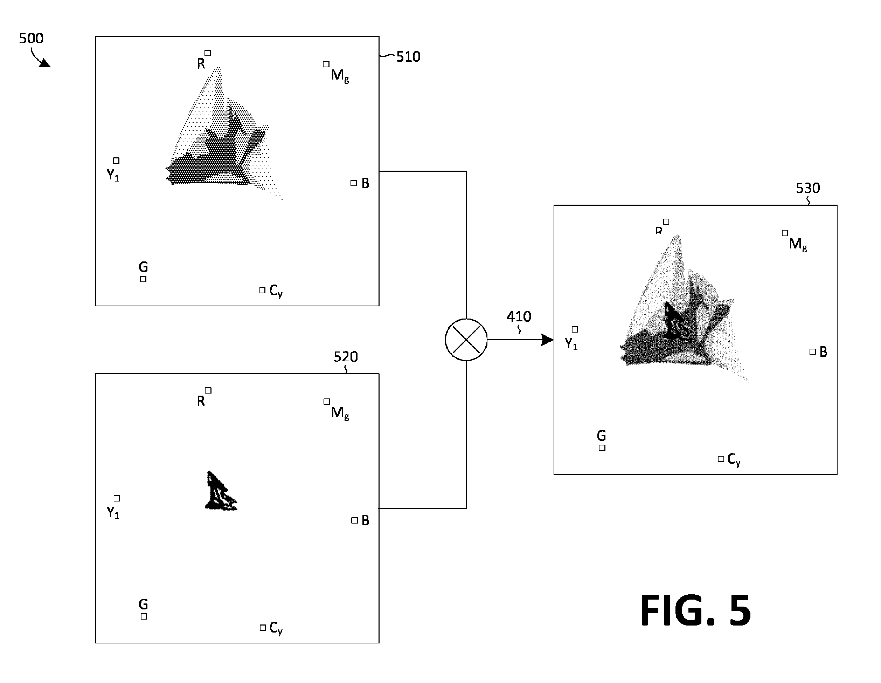

FIGURE 5 illustrates an example of a diamond display system 500 in accordance with certain embodiments of the disclosed technology. With such a diamond display system 500, an operator can check RGB balance for a specific region and compare it to other regions in the scene. In the example, a rasterized display for a particular ROI 520 of an image is overlaid on a rasterized display for the entire image 510, thus resulting in the final image 530 to be visually presented to the user. The waveform in the ROI display 520 may be presented in a different color, shading, etc. in the final image 530 so as to be more readily distinguishable from the rasterized display for the entire image 510 in the final image 530.

Among the various advantages offered by embodiments of the disclosed technology, operators can check contrast between objects in a scene more intuitively than with existing systems because the difference of the levels for regions are displayed as waveforms and, thus, there is no need to read numerical information and calculate differences.

Another of the various advantages offered by embodiments of the disclosed technology is that the level for a specified region and the level for a non-specified region may be simultaneously displayed, so that the operator can check the position of a particular object in the overall light dynamic range in a scene. When a light engineer changes the brightness of a bulb to change the light level on a specific object, such action typically affects the light level not only on the objects he intended to change but also on the surroundings. The engineer may now simply adjust the brightness of the lighting instruments while monitoring the light level on the objects and surroundings simultaneously.

Another of the various advantages offered by embodiments of the disclosed technology is that a single display shows the levels for multiple regions such that the operator does not need to move his or her eye focus, unlike the case of using prior displays, which have two (or more) separate tiles for comparing the levels of the ROIs. This advantageously allows operators to quickly determine the camera setting and lighting.

Another of the various advantages offered by embodiments of the disclosed technology is that, whereas prior WFMs require two or more tiles to display the waveforms with multiple ROIs, devices in accordance with the disclosed technology generally require only a single tile for multiple ROIs, thus enabling larger waveform presentation in a display monitor when a user needs to see multiple waveforms with multiple ROIs.

The following discussion is intended to provide a brief, general description of a suitable machine in which embodiments of the disclosed technology can be implemented. As used herein, the term "machine" is intended to broadly encompass a single machine or a system of communicatively coupled machines or devices operating together. Exemplary machines may include computing devices such as personal computers, workstations, servers, portable computers, handheld devices, tablet devices, and the like.

Typically, a machine includes a system bus to which processors, memory such as random access memory (RAM), read-only memory (ROM), and other state-preserving medium, storage devices, a video interface, and input/output interface ports can be attached. The machine may also include embedded controllers such as programmable or non-programmable logic devices or arrays, Application Specific Integrated Circuits (ASICs), embedded computers, smart cards, and the like. The machine may be controlled, at least in part, by input from conventional input devices such as keyboards and mice, as well as by directives received from another machine, interaction with a virtual reality (VR) environment, biometric feedback, or other pertinent input.

The machine may utilize one or more connections to one or more remote machines, such as through a network interface, modem, or other communicative coupling. Machines can be interconnected by way of a physical and/or logical network, such as an intranet, the Internet, local area networks, wide area networks, etc. One having ordinary skill in the art will appreciate that network communication may utilize various wired and/or wireless short range or long range carriers and protocols, including radio frequency (RF), satellite, microwave, Institute of Electrical and Electronics Engineers (IEEE) 545.11, Bluetooth, optical, infrared, cable, laser, etc.

Embodiments of the disclosed technology may be described by reference to or in conjunction with associated data including functions, procedures, data structures, application programs, instructions, etc. that, when accessed by a machine, may result in the machine performing tasks or defining abstract data types or low-level hardware contexts. Associated data may be stored in, for example, volatile and/or non-volatile memory, such as RAM and ROM, or in other storage devices and their associated storage media, which can include hard-drives, floppy-disks, optical storage, tapes, flash memory, memory sticks, digital video disks, biological storage, and other non-transitory, physical storage media.

Associated data may be delivered over transmission environments, including the physical and/or logical network, in the form of packets, serial data, parallel data, etc., and may be used in a compressed or encrypted format. Associated data may be used in a distributed environment, and stored locally and/or remotely for machine access.

Examples provide an electronic device, comprising an input configured to receive video data, at least one region of interest (ROI) block configured to identify an ROI within the video data, at least one rasterizing block coupled with the at least one ROI block and configured to rasterize an image based on the ROI within the video data as identified by the at least one ROI block, and a display processor configured to provide as output an overlay display in which the image rasterized by the at least one rasterizing block is overlaid a rasterized image corresponding to the video data.

In some examples, the video data corresponds to an image.

In some examples, the video data corresponds to a video feed.

In some examples, the video data corresponds to a file.

In some examples, the image rasterized by the at least one rasterizing block has at least one characteristic altered so as to be more readily distinguishable from the rasterized image corresponding to the video data.

In some examples, the at least one characteristic includes a color.

In some examples, the at least one characteristic includes a brightness.

In some examples, the at least one ROI block includes a first ROI block corresponding to a first ROI within the video data, and a second ROI block corresponding to a second ROI within the video data.

In some examples, the at least one rasterizing block includes a first rasterizing block coupled with the first ROI block and configured to rasterize an image corresponding to the first ROI, and a second rasterizing block coupled with the second ROI block and configured to rasterize an image corresponding to the second ROI.

In some examples, the image rasterized by the first rasterizing block has at least one characteristic altered so as to be more readily distinguishable from the rasterized image corresponding to the video data.

In some examples, the at least one characteristic of the image rasterized by the first rasterizing block includes a color.

In some examples, the at least one characteristic of the image rasterized by the first rasterizing block includes a brightness.

In some examples, the image rasterized by the second rasterizing block has at least one characteristic altered so as to be more readily distinguishable from the image rasterized by the first rasterizing block and the rasterized image corresponding to the video data.

In some examples, the at least one characteristic of the image rasterized by the second rasterizing block includes a color.

In some examples, the at least one characteristic of the image rasterized by the second rasterizing block includes a brightness.

In some examples, the overlay display is a waveform display.

In some examples, the overlay display is a vector display.

In some examples, the overlay display is a diamond display.

Examples also provide a machine-implemented method, comprising an input receiving video data, at least one region of interest (ROI) block identifying an ROI within the video data, at least one rasterizing block coupled with the at least one ROI block rasterizing an image based on the ROI within the video data as identified by the at least one ROI block, and a display processor providing as output an overlay display in which the image rasterized by the at least one rasterizing block is overlaid a rasterized image corresponding to the video data.

Examples also provide a machine-implemented method, comprising receiving video data at an input, identifying an ROI within the video data at least one region of interest (ROI) block, rasterizing an image based on the ROI within the video data as identified by the at least one ROI block at least one rasterizing block coupled with the at least one ROI block, and providing as output an overlay display in which the image rasterized by the at least one rasterizing block is overlaid a rasterized image corresponding to the video data by a display processor.

Examples also provide a method-implemented method, comprising an input receiving video data, a first region of interest (ROI) block identifying a first ROI within the video data, a second ROI block identifying a second ROI within the video data, a first rasterizing block coupled with the first ROI block rasterizing an image based on the first ROI within the video data as identified by the first ROI block, a second rasterizing block coupled with the second ROI block rasterizing an image based on the second ROI within the video data as identified by the second ROI block, and a display processor providing as output an overlay display in which the image rasterized by the first rasterizing block and the image rasterized by the second rasterizing block are both overlaid a rasterized image corresponding to the video data.

Examples also provide a method-implemented method, comprising receiving video data at an input, identifying a first ROI within the video data a first region of interest (ROI) block, identifying a second ROI within the video data at a second ROI block, rasterizing an image based on the first ROI within the video data as identified by the first ROI block at a first rasterizing block coupled with the first ROI block, rasterizing an image based on the second ROI within the video data as identified by the second ROI block at a second rasterizing block coupled with the second ROI block, and providing as output an overlay display in which the image rasterized by the first rasterizing block and the image rasterized by the second rasterizing block are both overlaid a rasterized image corresponding to the video data by a display processor.

Examples also provide one or more tangible, non-transitory computer-readable media storing executable instructions that, when executed by a processor, cause the processor to perform any of the described machine-implemented methods.

Having described and illustrated the principles of the invention with reference to illustrated example embodiments, it will be recognized that the illustrated embodiments may be modified in arrangement and detail without departing from such principles, and may be combined in any desired manner. And although the foregoing discussion has focused on particular embodiments, other configurations are contemplated.

In particular, even though expressions such as "according to an embodiment of the invention" or the like are used herein, these phrases are meant to generally reference embodiment possibilities, and are not intended to limit the invention to particular embodiment configurations. As used herein, these terms may reference the same or different embodiments that are combinable into other embodiments.

Consequently, in view of the wide variety of permutations to the embodiments that are described herein, this detailed description and accompanying material is intended to be illustrative only, and should not be taken as limiting the scope of the invention. What is claimed as the invention, therefore, is all such modifications as may come within the scope of the following claims and equivalents thereto.

## Claims

**1.** An electronic device, comprising:
an input configured to receive video data;
at least one region of interest, ROI, block configured to identify an ROI within the video data;
at least one rasterizing block coupled with the at least one ROI block and configured to rasterize an image based on the ROI within the video data as identified by the at least one ROI block; and
a display processor configured to provide as output an overlay display in which the image rasterized by the at least one rasterizing block is overlaid a rasterized image corresponding to the video data.

**2.** The electronic device of claim 1, in which the video data corresponds to an image, a video feed or a file.

**3.** The electronic device of claim 1 or 2, in which the image rasterized by the at least one rasterizing block has at least one characteristic altered so as to be more readily distinguishable from the rasterized image corresponding to the video data.

**5.** The electronic device of claim 3, in which the at least one characteristic includes a color or a brightness.

**6.** The electronic device of any preceding claim, in which the at least one ROI block includes:
a first ROI block corresponding to a first ROI within the video data; and
a second ROI block corresponding to a second ROI within the video data.

**7.** The electronic device of claim 6, in which that at least one rasterizing block includes:
a first rasterizing block coupled with the first ROI block and configured to rasterize an image corresponding to the first ROI; and
a second rasterizing block coupled with the second ROI block and configured to rasterize an image corresponding to the second ROI.

**8.** The electronic device of claim 7, in which the image rasterized by the first rasterizing block has at least one characteristic altered so as to be more readily distinguishable from the rasterized image corresponding to the video data.

**9.** The electronic device of claim 8, in which the at least one characteristic of the image rasterized by the first rasterizing block includes a color or a brightness.

**10.** The electronic device of claim 8 or 9, in which the image rasterized by the second rasterizing block has at least one characteristic altered so as to be more readily distinguishable from the image rasterized by the first rasterizing block and the rasterized image corresponding to the video data.

**11.** The electronic device of claim 10, in which the at least one characteristic of the image rasterized by the second rasterizing block includes a color or a brightness.

**12.** The electronic device of any preceding claim, in which the overlay display is a waveform display, a vector display or a diamond display.

**13.** A machine-implemented method, comprising:
an input receiving video data;
at least one region of interest, ROI, block identifying an ROI within the video data;
at least one rasterizing block coupled with the at least one ROI block rasterizing an image based on the ROI within the video data as identified by the at least one ROI block; and
a display processor providing as output an overlay display in which the image rasterized by the at least one rasterizing block is overlaid a rasterized image corresponding to the video data.

**14.** The method-implemented method of claim 13, wherein the at least one region of interest block comprises a first region of interest, ROI, block identifying a first ROI within the video data; and
a second ROI block identifying a second ROI within the video data;
wherein the method further comprises:
a first rasterizing block coupled with the first ROI block rasterizing an image based on the first ROI within the video data as identified by the first ROI block;
a second rasterizing block coupled with the second ROI block rasterizing an image based on the second ROI within the video data as identified by the second ROI block; and
wherein the display processor providing as output an overlay display is a display processor in which the image rasterized by the first rasterizing block and the image rasterized by the second rasterizing block are both overlaid a rasterized image corresponding to the video data.

**15.** One or more tangible, non-transitory computer-readable media storing executable instructions that, when executed by a processor, cause the processor to perform the machine-implemented method of claim 13 or 14.
